# DEMANDE DE BREVET EUROPEEN

(11) **EP 2 469 869 A1**
(43) Date de publication de la demande: **27.06.2012**
(21) Numéro de dépôt: 11192664.8
(22) Date de dépôt: 08.12.2011
(51) Int. Cl.: H04N 13/00, G06T 5/50, G06T 7/00

(54) **Procédé de suppression d'un masque de cockpit et système de visualisation de casque associé**

(30) Priorité: 23.12.2010 FR 1005075
(71) Demandeur: Thales, 92200 Neuilly Sur Seine (FR)
(72) Inventeur: Francois, Jean-Michel, 33140 CADAUJAC (FR); Grossetete, Matthieu, 33000 BORDEAUX (FR); Laluque, Laurent, 33000 BORDEAUX (FR)
(74) Mandataire: Bréda, Jean-Marc

(57) **Abrégé**

Le domaine général de l'invention concerne les dispositifs de visualisation de casque binoculaire portés par les pilotes d'aéronef. En utilisation de nuit, un des inconvénients de ce type de dispositif est que les montants du cockpit introduisent des masques visuels importants dans le champ des capteurs optiques. Le procédé selon l'invention est une méthode de suppression de ces masques dans les images présentées au pilote par traitement graphique des images binoculaires. Il repose sur le fait que, compte-tenu de la parallaxe, les montants (M) occupent dans les deux images des capteurs droit et gauche (C_{BNL}) des positions différentes. La comparaison des deux images permet de repérer, puis de supprimer ces masques et enfin de les remplacer par des parties d'images du paysage extérieur.

## Description

Le domaine de l'invention est celui des visualisations de casque comportant des dispositifs de visualisation à bas niveau de lumière utilisés dans des cockpits d'aéronefs. L'invention s'applique tout particulièrement aux hélicoptères utilisés en mission de nuit.

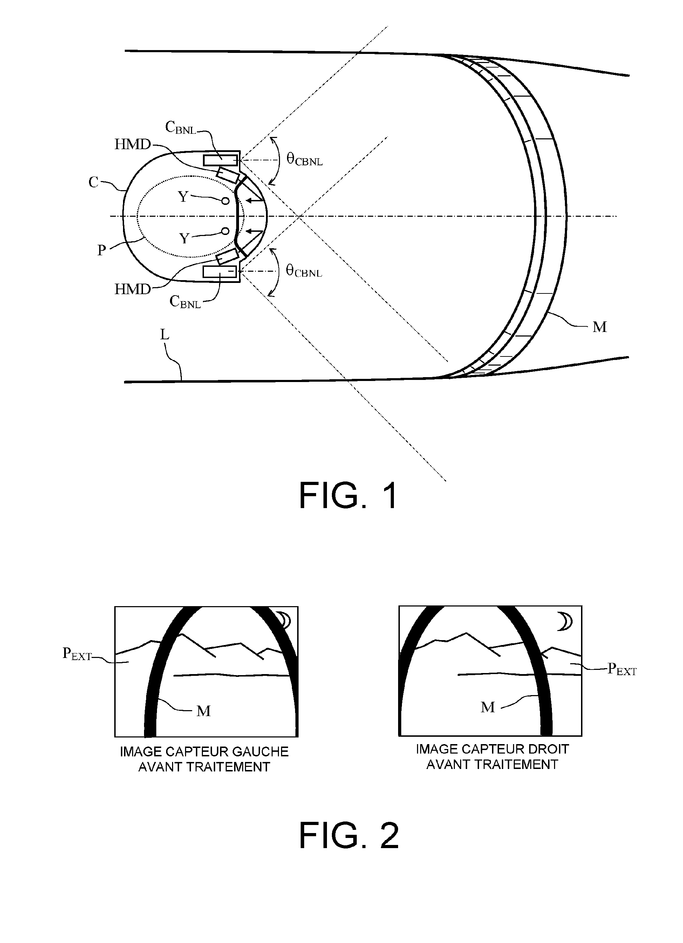

Un système de ce type est représenté en figure 1 en situation fonctionnelle portée par la tête d'un pilote dans un cockpit d'hélicoptère. La figure 1 est une vue de dessus. Elle comporte de façon schématique les limites L du cockpit, un montant du cockpit M en forme d'arceau, la tête du pilote P et son casque de visualisation C. La tête P comporte deux cercles Y représentatifs de la position des yeux. La coque du casque comporte deux capteurs C_{BNL} dits BNL, acronyme de « Bas Niveau de Lumière » permettant de réaliser une image intensifiée du paysage extérieur. Ces capteurs sont disposés de chaque côté du casque comme on le voit sur la figure 1. A chaque capteur, est associé un visuel de casque HMD, acronyme signifiant « Helmet Mounted Display ». Les deux visuels de casque donnent deux images à l'infini des images intensifiées. La collimation est généralement assurée par la visière du casque. Ces deux images collimatées sont perçues par les yeux du pilote. Ces deux images ont un grandissement unitaire de façon à se superposer au mieux au paysage extérieur.

Comme on le voit sur la figure 1, le montant M du cockpit en forme d'arceau se trouve inévitablement dans le champ θ_{CBNL} des deux capteurs C_{BNL}. Ces champs sont figurés par des traits pointillés sur la figure 1. Il introduit, compte-tenu des spécificités de sensibilité des capteurs BNL, un masque visuel noir ou très sombre dans chaque image qui est, bien entendu restitué dans les visuels de casque. Ainsi, comme on le voit sur la figure 2 qui représentent les vues du paysage extérieur perçues respectivement par l'oeil droit et l'oeil gauche du pilote à travers les visuels de casque, le pilote a une partie de son champ visuel oblitérée par le masque du montant.

Cet effet de masque gêne le pilote dans son pilotage et en particulier dans certaines phases de vol. Cet effet est encore renforcé par l'aspect souvent très sombre des montants. Ce problème peut être minimisé, voire annulé selon le cockpit, en modifiant à la conception l'emplacement des capteurs BNL servant à la capture des images de nuit. Cette solution entraîne des contraintes importantes de conception et implique de plus la conception d'un casque spécifique adapté à un porteur particulier. Il est également possible de déplacer les senseurs à l'extérieur du cockpit. Ce déplacement entraîne un point de vue non conforme modifiant la perception de l'environnement. D'autre part, ces senseurs doivent être asservis à la position de la tête du pilote.

Ce problème est actuellement préférentiellement laissé à la charge du pilote qui effectue des mouvements de tête réguliers pour obtenir l'information masquée par la cabine augmentant ainsi fortement sa charge de travail au détriment de sa disponibilité, connue également sous le terme de « situation awareness ».

Le procédé selon l'invention permet de résoudre ce problème. Le procédé est basé sur l'utilisation de la redondance d'informations apportée par la binocularité des capteurs BNL gauche et droit du casque. On remplace dans les images BNL le masque visuel des montants par une représentation virtuelle adoptant une symbologie adaptée du type « cockpit transparent » et on y apporte les informations de scène extérieure utiles au pilotage.

Plus précisément, l'invention a pour objet un procédé de suppression d'un masque de cockpit dans un dispositif de visualisation de casque porté par un pilote, ledit pilote placé dans un cockpit d'aéronef comportant au moins un montant placé dans le champ visuel du pilote, le dispositif de visualisation comprenant :
un premier ensemble binoculaire de capteurs d'images aptes à fonctionner à bas niveau de lumière et délivrant une première image intensifiée et une seconde image intensifiée, chacune desdites images intensifiées comprenant une image dudit montant superposée à une image du paysage extérieur ;
un second ensemble de visualisation de casque binoculaire agencé de façon à présenter au pilote la première image intensifiée et la seconde image intensifiée ;
un calculateur graphique de traitement d'images ;
caractérisé en ce que le procédé de suppression du masque de cockpit est réalisé par le calculateur graphique et comprend les étapes suivantes :
   Etape 1 : Création d'une carte des disparités existant entre la première image intensifiée et la seconde image intensifiée permettant d'identifier les éléments du montant constituant le masque ;
   Etape 2 : Détourage fin des éléments du montant constituant le masque par extraction de contours dans chacune des deux images intensifiées ;
   Etape 3 : Suppression desdits éléments dans la première image et remplacement par les parties correspondantes du paysage extérieur trouvées dans la seconde image et suppression desdits éléments dans la seconde image et remplacement par les parties correspondantes du paysage extérieur trouvées dans la première image ;
   Etape 4 : Présentation de la première image intensifiée traitée sans masque et de la seconde image traitée sans masque dans le second ensemble de visualisation de casque binoculaire.

Avantageusement, les parties du paysage extérieur non masquées ni dans la première image intensifiée ni dans la seconde image intensifiée étant redontantes, lesdites parties sont présentées, dans l'étape 4, avec une résolution améliorée prenant en compte cette redondance.

Avantageusement, lorsque le casque comporte un dispositif de détection de posture de la tête du pilote, l'étape 1 est précédée d'une étape 0 dans laquelle on prédétermine la position approximative des éléments du montant dans la première et dans la seconde image intensifiée.

Avantageusement, les éléments du montant sont équipés de marqueurs optiques passifs ou actifs identifiables au cours de l'étape 1 par le calculateur graphique.

Avantageusement, chaque image étant constituée de pixels, dans l'étape 3, les remplacements des éléments du masque par les parties correspondantes du paysage extérieur dans les images intensifiées est effectué par interpolation bilinéaire des pixels correspondant de chaque image.

Avantageusement, l'étape 3 est précédée d'une étape 2bis dans laquelle le calculateur graphique recherche, dans les zones voisines des éléments du montant des points ou des zones d'intérêt.

Avantageusement, l'étape 3 est suivie d'une étape 3bis dans laquelle on superpose à la première image intensifiée traitée et à la seconde image intensifiée traitée une image synthétique commune.

Avantageusement, l'image synthétique comporte une représentation stylisée des éléments du montant, ladite représentation étant située approximativement aux emplacements des éléments du montant réel.

Avantageusement, l'image synthétique comporte une symbologie classique de pilotage.

L'invention concerne également le dispositif de visualisation de casque associé au procédé décrit ci-dessus et comprenant :
un premier ensemble binoculaire de capteurs d'images aptes à fonctionner à bas niveau de lumière et délivrant une première image intensifiée et une seconde image intensifiée,
un second ensemble de visualisation de casque binoculaire agencé de façon à présenter au pilote la première image intensifiée et la seconde image intensifiée ;
un calculateur graphique de traitement d'images qui comprend les moyens électroniques et informatiques agencés de façon à mettre en oeuvre le procédé de suppression d'un masque de cockpit.

L'invention sera mieux comprise et d'autres avantages apparaîtront à la lecture de la description qui va suivre donnée à titre non limitatif et grâce aux figures annexées parmi lesquelles :
La figure 1 déjà décrite représente un dispositif de visualisation de casque dans son environnement ;
La figure 2 représente les images intensifiées vues par les deux capteurs avant traitement ;
La figure 3 représente les mêmes images après traitement et suppression du masque dû au montant ;
Les figures 4, 5 et 6 représentent une image après traitement comportant différentes représentations stylisées des éléments du montant ;
La figure 7 représente une image après traitement comportant une symbologie classique de pilotage.

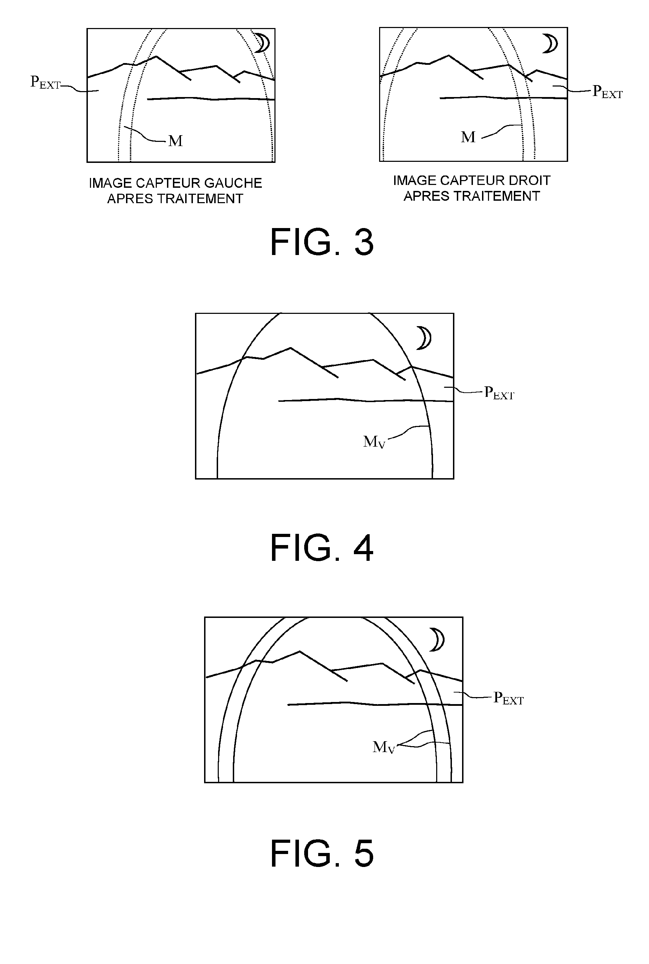

La figure 2 représente de façon schématique les images perçues par les capteurs BNL gauche et droit d'un dispositif de visualisation tel que représenté en figure 1. Ces images sont appelées IMAGE CAPTEUR GAUCHE AVANT TRAITEMENT et IMAGE CAPTEUR DROIT AVANT TRAITEMENT sur cette figure 2. Ces images comportent un paysage de montagne P_{EXT} éclairé par la lune et une arche noire M représentant les montants du cockpit. Le paysage étant au loin, il occupe le même emplacement sur les images gauche et droite, les objets plus proches pouvant avoir une certaine parallaxe entre les images gauche et droite. Par contre, comme on le voit sur la figure 2, le montant M étant nécessairement proche du pilote, il n'occupe pas le même emplacement sur les images gauche et droite compte-tenu de la parallaxe existant entre les capteurs BNL gauche et droit. Ainsi, les parties masquées du paysage par le montant et qui n'apparaissent pas sur l'image du capteur gauche apparaissent sur l'image du capteur droit et réciproquement. Si l'on somme les informations venant des deux images, il est possible d'éliminer le masque introduit par le montant et de retrouver une image traitée comportant l'intégralité du paysage. La figure 3 illustre cette méthode. Les images traitées appelées IMAGE CAPTEUR GAUCHE APRES TRAITEMENT et IMAGE CAPTEUR DROIT APRES TRAITEMENT ne comportent plus de montants. On a simplement indiqué en pointillés les positions initiales du montant M dans les images gauche et droite.

Le procédé selon l'invention repose sur ce principe. Plus précisément, le procédé de suppression du masque de cockpit est réalisé par le calculateur graphique et comprend les quatre étapes principales suivantes :
Etape 1 : Création d'une carte des disparités existant entre la première image intensifiée et la seconde image intensifiée venant des capteurs BNL gauche et droit permettant d'identifier les éléments du montant constituant le masque ;
Etape 2 : Détourage fin des éléments du montant constituant le masque par extraction de contours dans chacune des deux images intensifiées ;
Etape 3 : Suppression desdits éléments dans la première image et remplacement par les parties correspondantes du paysage extérieur trouvées dans la seconde image et suppression desdits éléments dans la seconde image et remplacement par les parties correspondantes du paysage extérieur trouvées dans la première image ;
Etape 4 : Présentation de la première image intensifiée traitée sans masque et de la seconde image traitée sans masque dans le second ensemble de visualisation de casque binoculaire.

Lorsque le casque comporte un dispositif de détection de posture de la tête du pilote ou « DDP », l'étape 1 peut être précédée d'une pré-étape dans laquelle on prédétermine la position approximative des éléments du montant dans la première et dans la seconde image intensifiée. On diminue ainsi le temps de recherche et ainsi la latence. On peut également utiliser cette prédétermination pour contrôler l'intégrité des résultats obtenus dans les étapes suivantes du procédé.

Les éléments du montant peuvent être équipés de marqueurs optiques passifs ou actifs identifiables au cours de l'étape 1 par le calculateur graphique. Les capteurs actifs peuvent être des diodes émettant, par exemple, dans un domaine spectral infrarouge invisible au pilote et situé dans la bande de détection des capteurs.

L'identification des éléments du masque cabine peut être faite grossièrement par la création d'une carte des disparités existant entre les deux images. On peut également identifier les éléments de masquage du cockpit par des méthodes plus complexes d'interpolation dense de mouvements entre les deux capteurs. Ces méthodes sont connues de l'homme du métier.

Pendant l'étape 2, les méthodes graphiques permettant de réaliser un détourage fin des éléments du montant peuvent être des méthodes de filtrage ou de « binarisation » bien connues dans le domaine du traitement d'images graphiques.

Au cours de l'étape 3, le calculateur graphique peut rechercher, dans une première image et dans les zones voisines des éléments du montant, des points ou des zones d'intérêt correspondant à la zone « attendue » de la seconde image. Différentes techniques sont utilisables. On citera :
- Les méthodes d'appariement de zones de type « Block Matching » ;
- Les méthodes par recherche et « matching » de points d'intérêts avec les descripteurs adaptés à la forme du montant recherché.

De manière à lisser les artefacts causés par cette incrustation entre images, un masque de fusion, créé à partir des éléments de détourage fin des montants de l'étape 2 et donnant des poids adaptés respectifs à chaque image peut être utilisé.

Connaissant précisément la disposition et les paramètres optiques des deux capteurs comme la position de leurs axes optiques, la distorsion des optiques et l'écartement des axes optiques, on réalise au cours de l'étape 3, toujours par l'utilisation d'un calculateur graphique spécifique, le comblement des parties d'images des voies masquées par les montants. Dans cette étape, si l'on souhaite obtenir une grande rapidité de traitement, il est possible d'utiliser uniquement le modèle du système de capteurs, préalablement calibré, pour simplement recalculer point à points les pixels manquants dans les deux images par interpolation bilinéaire des pixels associé de l'image de l'autre voie.

Les parties du paysage extérieur non masquées ni dans la première image intensifiée ni dans la seconde image intensifiée étant redondantes, lesdites parties peuvent être présentées, dans l'étape 3, avec une résolution améliorée prenant en compte cette redondance. On peut, par exemple, moyenner les niveaux des pixels de chaque image en prenant en compte les niveaux des pixels correspondant dans l'autre image, baissant ainsi le niveau de bruit. Des traitements plus sophistiqués sont également possibles.

L'étape 3 peut être suivie d'une étape 3bis dans laquelle on superpose à la première image intensifiée traitée et à la seconde image intensifiée traitée une image synthétique commune.

Cette image synthétique a plusieurs intérêts. On sait que les montants de cabine représentent un masquage du paysage extérieur, mais qu'ils servent aussi de repère au pilote pour déterminer l'attitude de l'aéronef. Il est donc intéressant de les réintroduire sous forme de repères virtuels approximativement aux emplacements des éléments du montant réel.

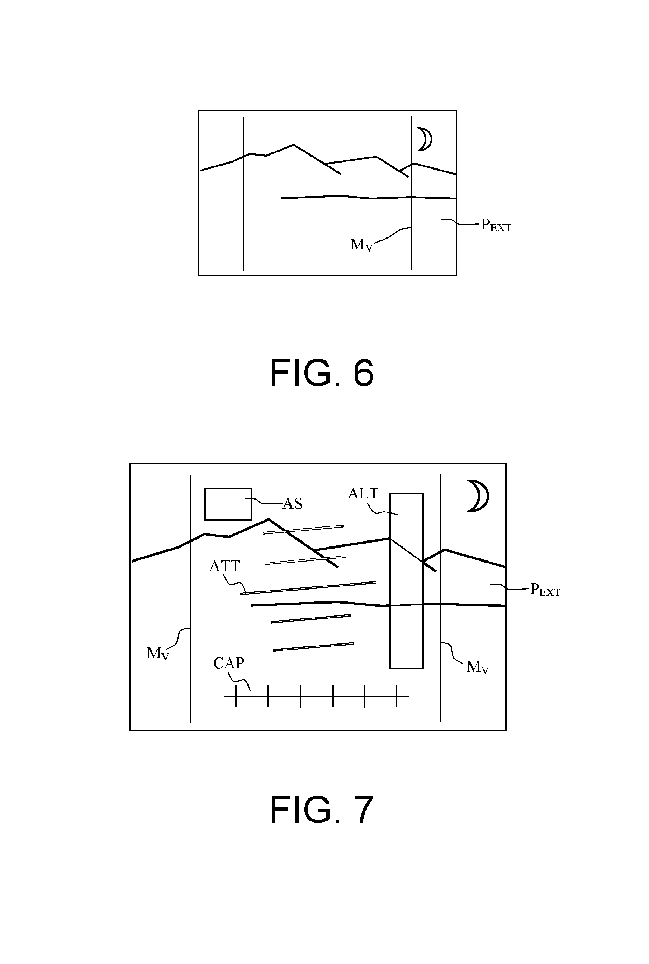

Les figures 4, 5 et 6 représentent trois exemples possibles de cette réimplantation. Sur la figure 4, les montants virtuels Mᵥ ont la forme d'arche des montants réels mais, de façon à minimiser les masques visuels, cette arche comporte un seul arc d'épaisseur faible. Sur la figure 5, cet arc est doublé de façon à simuler l'épaisseur des montants. Sur la figure 6, les montants Mᵥ sont représentés par deux traits verticaux droits.

Il est, bien entendu, intéressant que l'image synthétique comporte tout ou partie des informations nécessaires au pilotage. Ainsi, par exemple, sur la figure 7, l'image synthétique comporte une indication de la vitesse de l'aéronef AS, de son attitude ATT, de son altitude ALT et de son cap CAP.

Le procédé selon l'invention permet ainsi de diminuer la charge de travail du pilote tout en permettant la conception d'un casque multi-porteur puisque le travail de minimisation, voire de suppression selon le cockpit du masque cabine est effectué par un calculateur graphique spécifique qui n'entraîne aucune modification ni des parties optiques, mécaniques ou électroniques du dispositif de visualisation de casque, seul le logiciel de traitement numérique d'images est spécifique.

Comme il a été dit, le domaine d'application privilégié est celui du « démasquage » des montants de cockpit d'aéronefs pour présentation sur les dispositifs de visualisation de casque mais d'autres applications sont possibles. On citera, par exemple, la correction d'image pour appareil de prise de vue 3D dans le cadre d'applications photo ou vidéo.

## Revendications

1. Procédé de suppression d'un masque de cockpit dans un dispositif de visualisation de casque porté par un pilote, le casque comportant un dispositif de détection de posture de la tête du pilote, ledit pilote placé dans un cockpit d'aéronef comportant au moins un montant (M) placé dans le champ visuel du pilote, le dispositif de visualisation comprenant :
un premier ensemble binoculaire de capteurs d'images (C_{BNL}) aptes à fonctionner à bas niveau de lumière et délivrant une première image intensifiée et une seconde image intensifiée, chacune desdites images intensifiées comprenant une image dudit montant superposée à une image du paysage extérieur ;
un second ensemble de visualisation de casque binoculaire (HMD) agencé de façon à présenter au pilote la première image intensifiée et la seconde image intensifiée ;
un calculateur graphique de traitement d'images ;
**caractérisé en ce que** le procédé de suppression du masque de cockpit est réalisé par le calculateur graphique et comprend les étapes suivantes :
Etape 0 : Prédétermination de la position approximative des éléments du montant dans la première et dans la seconde image intensifiée ;
Etape 1 : Création d'une carte des disparités existant entre la première image intensifiée et la seconde image intensifiée permettant d'identifier les éléments du montant constituant le masque ;
Etape 2 : Détourage fin des éléments du montant constituant le masque par extraction de contours dans chacune des deux images intensifiées ;
Etape 3 : Suppression desdits éléments dans la première image et remplacement par les parties correspondantes du paysage extérieur trouvées dans la seconde image et suppression desdits éléments dans la seconde image et remplacement par les parties correspondantes du paysage extérieur trouvées dans la première image ;
Etape 4 : Présentation de la première image intensifiée traitée sans masque et de la seconde image traitée sans masque dans le second ensemble de visualisation de casque binoculaire.

2. Procédé de suppression d'un masque de cockpit selon la revendication 1, **caractérisé en ce que**, les parties du paysage extérieur non masquées ni dans la première image intensifiée ni dans la seconde image intensifiée étant redontantes, lesdites parties sont présentées, dans l'étape 4, avec une résolution améliorée prenant en compte cette redondance.

3. Procédé de suppression d'un masque de cockpit selon la revendication 1, **caractérisé en ce que** les éléments du montant sont équipés de marqueurs optiques passifs ou actifs identifiables au cours de l'étape 1 par le calculateur graphique.

4. Procédé de suppression d'un masque de cockpit selon la revendication 1, **caractérisé en ce que**, chaque image étant constituée de pixels, dans l'étape 3, les remplacements des éléments du masque par les parties correspondantes du paysage extérieur dans les images intensifiées est effectué par interpolation bilinéaire des pixels correspondant de chaque image.

5. Procédé de suppression d'un masque de cockpit selon la revendication 1, **caractérisé en ce que**, l'étape 3 est précédée d'une étape 2bis dans laquelle le calculateur graphique recherche, dans les zones voisines des éléments du montant des points ou des zones d'intérêt.

6. Procédé de suppression d'un masque de cockpit selon la revendication 1, **caractérisé en ce que**, l'étape 3 est suivie d'une étape 3bis dans laquelle on superpose à la première image intensifiée traitée et à la seconde image intensifiée traitée une image synthétique commune.

7. Procédé de suppression d'un masque de cockpit selon la revendication 6, **caractérisé en ce que**, l'image synthétique comporte une représentation stylisée (Mᵥ) des éléments du montant, ladite représentation étant située approximativement aux emplacements des éléments du montant réel.

8. Procédé de suppression d'un masque de cockpit selon la revendication 6, **caractérisé en ce que**, l'image synthétique comporte une symbologie classique de pilotage (AS, ALT, ATT et CAP).

9. Dispositif de visualisation de casque comprenant :
un premier ensemble binoculaire de capteurs d'images (C_{BNL}) aptes à fonctionner à bas niveau de lumière et délivrant une première image intensifiée et une seconde image intensifiée,
un second ensemble de visualisation de casque binoculaire (HMD) agencé de façon à présenter au pilote la première image intensifiée et la seconde image intensifiée ;
un calculateur graphique de traitement d'images ;
**caractérisé en ce que** le calculateur comprend les moyens électroniques et informatiques agencés de façon à mettre en oeuvre le procédé de suppression d'un masque de cockpit selon l'une des revendications précédentes.
